# EUROPEAN PATENT APPLICATION

(11) **EP 1 541 502 A1**
(43) Date of publication of application: **15.06.2005**
(21) Application number: 04257710.6
(22) Date of filing: 11.12.2004
(51) Int. Cl.: B65F 1/02, B65F 1/14

(54) **Container**

(30) Priority: 13.12.2003 GB 0328926
(71) Applicant: Stone, Mark Andrew., Belper Derbyshire DE56 1HN (GB)
(72) Inventor: Stone, Mark Andrew., Belper Derbyshire DE56 1HN (GB)
(74) Representative: Swindell & Pearson

(57) **Abstract**

A container (10) has an interior (16) in which a first material is receivable, and includes a compartment (32) in which a second material is receivable. The compartment (32) is substantially enclosed so that in use the second material is kept separate from the first material. The compartment (32) is formed integrally with the container (10).

## Description

The present invention relates to containers, particularly but not exclusively rotationally moulded containers for litter.

Rotational moulding is a known manufacturing method used for producing hollow articles of plastics material, allowing large products to be produced relatively economically. It is known to manufacture containers such as litter bins by this method. Typically, litter bins include a securing means by which the bin can be secured to the ground, the securing means often comprising through holes in the base of the bin through which bolts can be inserted into the ground below. However, it is often required to move litter bins, and bins which are bolted down are subject to damage, particularly from vehicles. An alternative securing means is to provide a ballast such as a plug of concrete, which is placed in the bottom of the bin.

According to the present invention, there is provided a container having an interior in which a first material is receivable, the container including a compartment in which a second material is receivable, the compartment being substantially enclosed so that in use the second material is kept separate from the first material, the compartment being formed integrally with the container.

Preferably the container comprises a base, side walls extending from the base, the side walls and base together defining the interior in which the first material is receivable.

Preferably the compartment is located so that in use, when substantially filled with the second material, the second material acts as ballast to lower the centre of gravity of the container.

Preferably the compartment forms part of the base, and may form substantially the whole base. Preferably the compartment includes first and second end walls, side walls extending therebetween, the first and second end walls and the side walls defining a compartment interior. Preferably the first and second end walls and the side walls completely enclose the compartment interior. Preferably the compartment includes filling means. The filling means may include an aperture, and may further include a closure member for closing the aperture.

Preferably the container side walls each include spaced inner and outer walls.

Preferably the container includes joining means between the side walls and the compartment. Preferably the joining means comprises a joint, which may extend continuously between the side walls and the compartment. Preferably the joint extends between the inner side walls of the container and the compartment. Preferably the inner side walls, the joint and one of the end walls of the compartment form a continuous interior surface. Preferably the joint is integrally moulded with the container. Preferably at the joint, the material thickness is at least 100% and less than 200% of the wall thickness of the container side wall and/or the compartment wall. More preferably, the joint material thickness is at least 150% and less than 170% of the said wall thickness.

Preferably a recess is defined between the container side walls and the compartment. Preferably the recess extends inwardly from an end of the container. Preferably the recess spaces the joining means from the end of the container. Preferably the recess tapers inwardly.

Preferably the container is a litter bin, and the first material may comprise litter. Preferably the second material is a ballast material, such as water, sand, concrete, or a settable gel.

Preferably the container is formed by moulding, and may be formed by rotational moulding. Preferably the container is formed of plastics material, and may be formed of polyethylene.

Further according to the present invention, there is provided moulding apparatus for forming a container, the apparatus including a first and a second former, the first former for forming an interior for the container in which a first material is receivable, the first and second formers being arranged so that during moulding a substantially enclosed compartment is formed integrally with the container, a second material being receivable in the compartment in use, the compartment being formed to keep the second material separate from the first material.

Preferably the apparatus includes mould walls defining an enclosed cavity, and the first and second former are located within the cavity. The first and second former may each extend from the mould walls.

Preferably a gap is defined between the first former and the second former. Preferably the gap has a dimension such that during moulding the gap is substantially filled by material being moulded. Preferably the dimension is related to the thickness of the walls of the container. The dimension may be at least 100% and less than 200% of the said thickness, and may be between 150% to 170% of the said thickness.

Preferably, as the gap is filled, the substantially enclosed compartment is formed.

Preferably the first former is an interior former, and may extend into the cavity from one end of the cavity. Preferably the second former is a recess former, and may extend into the cavity from an opposed end of the cavity, towards the interior former.

Preferably the second former divides the cavity into a compartment part and a side wall part. Preferably the gap communicates between the compartment part and the side walls part.

Preferably the apparatus is for use in a rotational moulding process. Preferably the container formed is a litter bin.

Embodiments of the present invention will now be described, by way of example only, and with reference to the accompanying drawings, in which:-
Fig. 1 is a perspective view from one side and above of a container according to the invention;
Fig. 2 is a perspective view from one side and below of the container of Fig. 1;
Fig. 3 is a cross sectional view of the container;
Fig. 4 is an enlarged detail of part of the container shown in Fig. 3 as indicated by a circle and referenced IV; and
Fig. 5 is a simplified cross sectional view of a mould apparatus according to the invention.

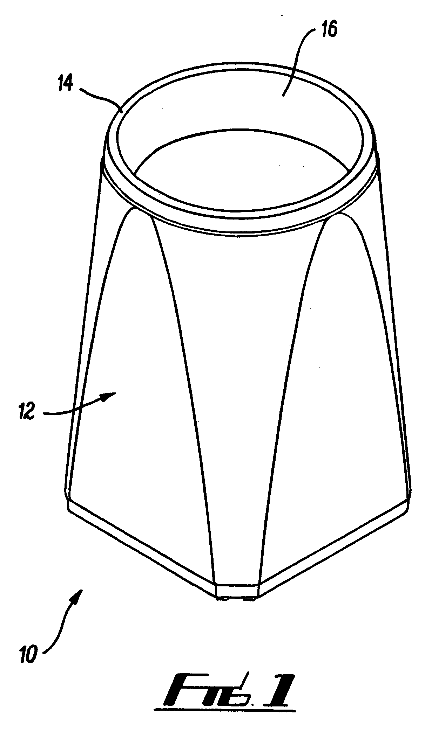

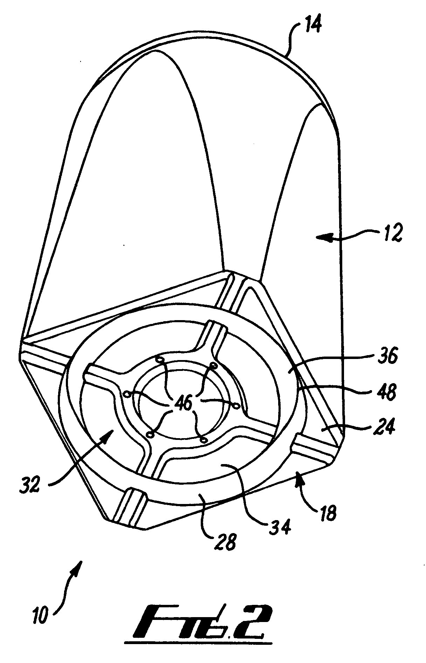

Figs. 1 and 2 show perspective views of a container 10 in the form of a litter bin, the container 10 comprising a base indicated generally at 18 on Fig. 2, side walls 12 extending from the base 18 upwardly to a rim 14, the side walls 12 and base 18 together defining an interior 16.

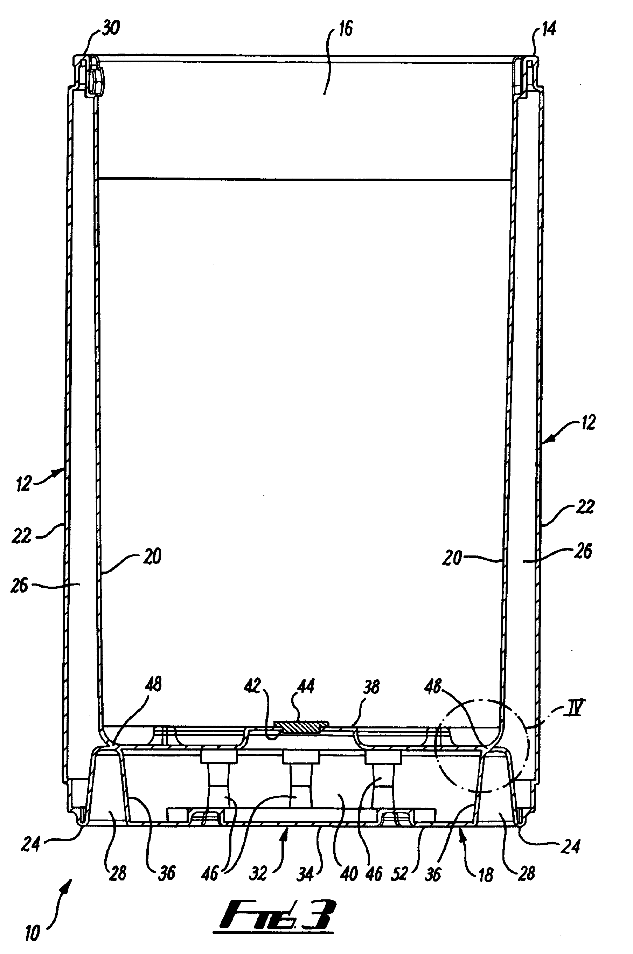

Fig. 3 shows a cross sectional view through the container 10. The side walls 12 each include spaced inner and outer walls 20, 22, a base wall 24 and a rim wall 30. The inner and outer walls 20, 22, the base wall 24 and the rim wall 30 together define an enclosed cavity 26.

The base 18 of the container 10 includes a compartment 32. The compartment 32 comprises first and second end walls 34, 38, and side walls 36 extending therebetween, the first and second end walls 34, 38 and the side walls 36 completely enclosing a compartment interior 40. The second end wall 38 forms a base surface for the container interior 16, and includes a filling means in the form of a filling aperture 42 defined by the second end wall 38. The filling means further includes a closure member for closing the aperture in the form of a plug 44. The compartment 32 includes a plurality of passages 46 spaced in a circular arrangement as most clearly seen in Fig. 2, each passage 46 extending from the second end wall 38 to the first end wall 34.

The container 10 includes joining means comprising a joint 48 extending between the side walls 26 and the compartment 32. More particularly, the joint 48 extends from an upper edge of the compartment 32 between the compartment side walls 36 and the second end wall 38 to the inner wall 20, and extends continuously around the compartment 32 between the side walls 12 and the compartment 32. The joint 48 is integrally moulded with the side walls 12 and the compartment 32. The inner side walls 20, the joint 48 and the second end wall 38 form a continuous surface.

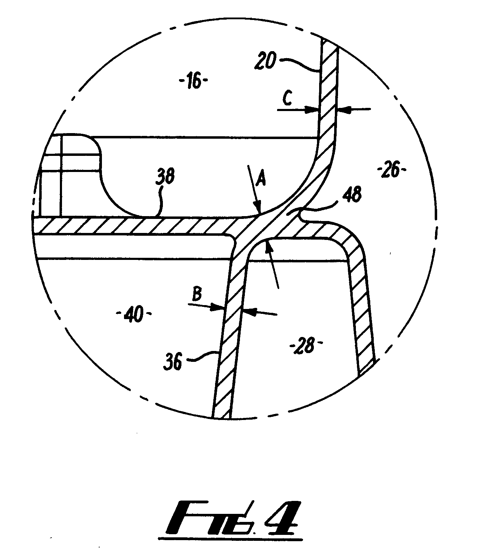

Fig. 4 shows an enlarged detail of the joint 48. In this figure, the dimension indicated by arrows A is the material thickness at the joint, the dimension indicated by arrows B is the material thickness of the compartment side wall 36, and the dimension indicated by arrows C is the thickness of material of the inner wall 20. Typically, the wall thickness for the inner side wall 20 and the compartment side wall 36 will be substantially the same, and these will also be substantially the same as the wall thicknesses of the outer side wall 22, and the first and second end walls 34, 38. The thickness of material at the joint 48 is arranged to be greater than a single wall thickness of the adjacent walls, but less than twice the wall thickness of the adjacent walls. Optimally, the material thickness of the joint is between 150 - 170% of the adjacent wall thickness. For example, the wall thicknesses of the adjacent walls could be approximately 4mm, and the material thickness at the joint could be approximately 6.4mm.

The base 18 includes a recess 28 defined between the side walls 12 and the compartment 32, the recess 28 extending inwardly from an outer surface 52 of the base 18 to the joint 48, spacing the joint 48 from the outer surface 52 of the base 18. The recess 18 tapers inwardly, and as seen in Fig. 2 is annular in form, extending around the perimeter of the compartment 32.

The container 10 is used as follows. The compartment interior 40 can be filled with a ballast material such as water, sand, concrete or a settable gel at any convenient time. For instance, the container 10 could be delivered to site with the compartment 32 empty and the compartment interior 40 could then be filled with sand or other ballast material, which may be readily available on site, thus reducing haulage costs and possible problems with manual handling regulations. Alternatively, the compartment interior 40 could be filled by the supplier before delivery. The compartment interior 40 is simply filled by removing the plug 44, filling with the ballast material through the filling aperture 42, and replacing the plug 44. A sealing means or a locking means could be provided so that the plug 44 is either permanently sealed in position, or is locked in position to prevent removal of the plug 44 and the ballast material. If also desired, or alternatively, fasteners such as bolts may be inserted through the passages 37 into the ground to hold the container 10 in position. The ballast material is thus kept separate in use from the contents of the interior 16 which could comprise items of litter, so that contamination of the ballast material does not occur.

The location of the compartment 32 in the base 18 ensures that the ballast material lowers the centre of gravity of the container 10, thus improving the stability of the container 10.

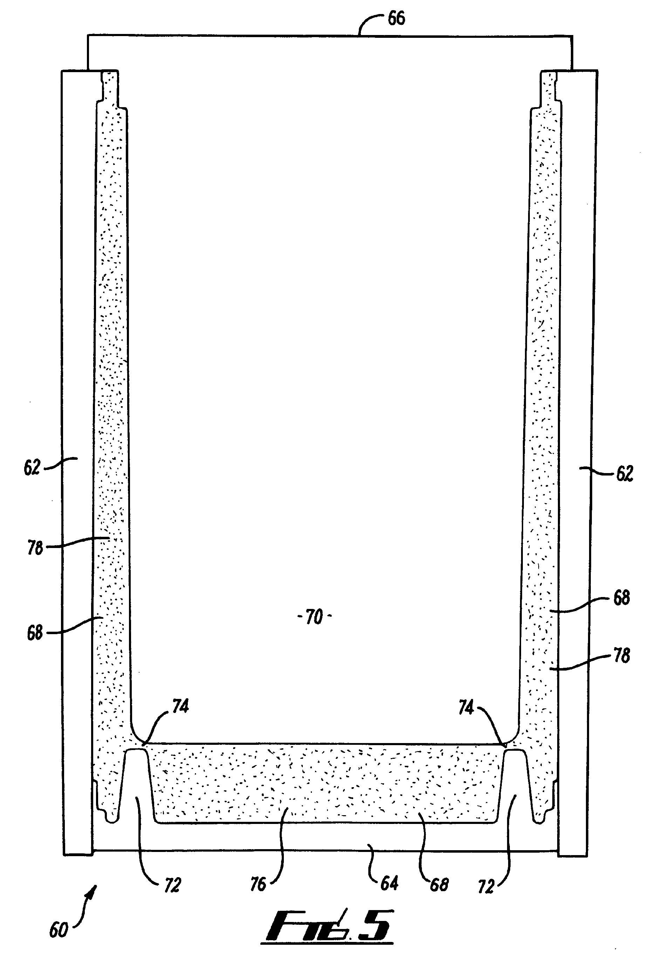

Fig. 5 shows in a simplified diagrammatic form a cross sectional view of moulding apparatus for forming the container of Figs. 1 to 4 as described above. The moulding apparatus 60 is for use in a rotational moulding process, and includes side walls 62, a base end wall 64 and a top end wall 66, the side walls 62, the base end wall 64 and the top end wall 66 together enclosing a cavity 68. The top end wall 66 includes an interior former 70 which extends into the cavity 68. The base end wall 64 includes a recess former 72 which extends into the cavity 68 towards the interior former 70. A gap 74 is defined between the interior former 70 and the recess former 72. The gap 74 has a minimum dimension substantially equal to the thickness of material at the joint 48.

The recess former 72 substantially divides the cavity into a compartment part 76 and a side walls part 78. The gap 74 communicates between the compartment part 76 and the side walls part 78.

In use, the moulding apparatus 60 is assembled and the cavity 68 charged with a preweighed amount of plastics material in powder form. Typically, polyethylene is used, although other materials such as polypropylene, low density polyethylene, ethylene vinyl acetate, ethylene butyl acetate, or polyvinyl chloride, could be used alternatively. The moulding apparatus 60 is closed, and then heated and rotated about two axes, so that the plastics powder melts and coats the mould walls 62, 64, 66 of the cavity 68. As the process continues, the thickness of material on the mould walls 62, 64, 66 builds up. Eventually, at the gap 74, the thickness of material on the interior former 70 and the thickness of the material on the recess former 72 is such that the gap 74 is filled with material, forming the joint 48. As the process continues, the joint 48 enlarges. It will thus be appreciated that the dimension of the gap 74 is critical to achieving a successful joint. The dimension of the gap 74 required will be dependent upon the plastics material used, and in particular, the wall thickness of the finished product. The wall thickness of the finished product is determined by the amount of powder which is added to the moulding apparatus 60 at the beginning of the process. Generally for rotational moulding, a substantially even wall thickness is achieved for all the walls of the product. In this case, as the gap 74 is sealed during the process, it would be possible to achieve a different wall thickness for the container side walls 12 compared with the compartment 32, depending on the charges of powder added to the respective parts of the cavity 68.

If the gap 74 is too great relative to the end product wall thickness, the gap 74 will not fill during the rotational moulding process, or may only fill imperfectly, so that either no joint 48 is formed, or a discontinuous joint is formed, with voids or gaps. If, however, the gap 74 is too small relative to the end product wall thickness, the joint 48 will be weak, and the gap 74 may fill too early in the process leading to an uneven distribution of the plastics material between the compartment part 76 and the side walls part 78, with resultant unevenness in wall thickness in the finished product. Although in practice some shrinkage of the finished product occurs and adjustment is made for this, the gap 74 must generally be at least 100% and less than 200% of the container wall thickness, and optimally is between 150 - 170% of the container wall thickness.

When the plastics powder is fully melted and evenly distributed, the moulding apparatus 60 is cooled so that the melted plastics material solidifies. The moulding apparatus 60 is then opened and the container 10 removed. Both the recess former 72 and the interior former 70 taper inwardly for ease of removal. The filling aperture 42 is then formed by drilling the second end wall 38.

Various modifications may be made without departing from the scope of the invention. The relative sizes and shapes of the container and the compartment could vary from that shown and described. The compartment could form the whole base of the container. The joint could be located in a different position. For instance, it would be feasible to position the joint close to or at the outer surface 52 of the base 18, the recess former 72 projecting from the interior former 70. However, this would have the disadvantage that the recess 28 would extend downwardly from the container interior 16, providing a dirt trap in use. An advantage of the present arrangement as shown, is that the interior surfaces of the inner wall 20, the joint 48 and the second end wall 38 are continuous, without any deep recesses to provide trap points for dirt. The filling aperture 42 could be located in a different position. For instance, the filling aperture 42 could be located on the first end wall 34.

There is thus provided a container, and in particular a litter bin, which may be economically manufactured by rotational moulding, and includes an integrally moulded ballast compartment. The integrally moulded compartment reduces the overall cost of providing a ballast means for a litter bin. The ballast compartment is non detachable, and cannot therefore be lost during delivery or on site, providing both the manufacturer, the stockist (such as a builders' merchant) and the installer with a reassurance that the product will arrive on site complete and ready for installation. Once installed, litter bins can be subject to rough use from such sources as damage by vehicles, vandals, or simply handling during emptying. Again, during use, the integral ballast compartment is non detachable, so that the owner is reassured that the ballast will not be removed and the litter bin subsequently become unstable. A further consideration is that removable concrete ballasts can be used as projectiles by vandals.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A container (10), **characterised in that** the container has an interior (16) in which a first material is receivable, the container including a compartment (32) in which a second material is receivable, the compartment being substantially enclosed so that in use the second material is kept separate from the first material, the compartment being formed integrally with the container.

2. A container according to claim 1, **characterised in that** the container (10) comprises a base (18), side walls (20, 22) extending from the base, the side walls and base together defining the interior (16) in which the first material is receivable, the compartment forming part of the base.

3. A container according to claim 2, **characterised in that** the container side walls (20, 22) each include spaced inner and outer walls (20, 22).

4. A container according to claim 3, **characterised in that** the container includes joining means (48) between the side walls and the compartment, the joining means comprising a joint (48), the joint extending between the inner side walls (20) of the container and the compartment (32).

5. A container according to claim 4, **characterised in that** the joint (48) extends continuously between the side walls (20) and the compartment (32).

6. A container according to claim 5, **characterised in that** the inner side walls (20), the joint (48) and one of the end walls (38) of the compartment form a continuous interior surface.

7. A container according to any of claims 4 to 6, **characterised in that** at the joint (48), the material thickness is at least 100% and less than 200% of the wall thickness of the container side wall (20) and/or the compartment wall (36, 38).

8. A container according to claim 7, **characterised in that** at the joint (48), the material thickness is at least 150% and less than 170% of the said wall thickness.

9. A container according to any of claims 2 to 8, **characterised in that** a recess (28) is defined between the container side walls (20, 22) and the compartment (32).

10. A container according to any of preceding claims, **characterised in that** the container is a litter bin and the first material comprises litter.

11. A container according to any of preceding claims, **characterised in that** the second material is a ballast material, such as water, sand, concrete, or a settable gel.

12. A container according to any of preceding claims, **characterised in that** the container is formed by rotational moulding.

13. A container according to any of preceding claims, **characterised in that** the container is formed of plastics material.

14. Moulding apparatus (60) for forming a container, **characterised in that** the apparatus includes a first and a second former (70, 72), the first former (70) for forming an interior for the container in which a first material is receivable, the first and second formers (70, 72) being arranged so that during moulding a substantially enclosed compartment is formed integrally with the container, a second material being receivable in the compartment in use, the compartment being formed to keep the second material separate from the first material.

15. Moulding apparatus according to claim 14, **characterised in that** the apparatus (60) includes mould walls (62, 64, 66) defining an enclosed cavity (68), and the first and second former (70, 72) are located within the cavity (68).

16. Moulding apparatus according to claim 15, **characterised in that** the first former (70) is an interior former, and extends into the cavity (68) from one end of the cavity.

17. Moulding apparatus according to claim 16, **characterised in that** the second former (72) is a recess former and extends into the cavity (68) from an opposed end of the cavity, towards the interior former (70).

18. Moulding apparatus according to any of claims 14 to 17, **characterised in that** a gap (74) is defined between the first former (70) and the second former (72), the gap having a dimension such that during moulding the gap is substantially filled by material being moulded, and as the gap is filled, the substantially enclosed compartment is formed.

19. Moulding apparatus according to claim 18, **characterised in that** the dimension is at least 100% and less than 200% of the thickness of the walls of the container.

20. Moulding apparatus, according to claim 19, **characterised in that** the dimension is between 150% to 170% of the said thickness.

21. Moulding apparatus according to any of claims 14 to 20, **characterised in that** the apparatus is for use in a rotational moulding process.

22. Moulding apparatus according to any of claims 14 to 21, **characterised in that** the container formed is a litter bin.
